# EUROPÄISCHE PATENTANMELDUNG

(11) **EP 4 647 638 A1**
(43) Veröffentlichungstag der Anmeldung: **12.11.2025**
(21) Anmeldenummer: 25155192.5
(22) Anmeldetag: 31.01.2025
(51) Int. Cl.: F16K 37/00, G01D 5/14

(54) **SENSOREINRICHTUNG UND VERFAHREN ZUM BESTIMMEN EINES ÖFFNUNGSGRADS EINES VENTILS EINER ARMATUR SOWIE ARMATUR**

(30) Priorität: 08.05.2024 DE 102024204333
(71) Anmelder: Düker GmbH, 97753 Karlstadt (DE)
(72) Erfinder: FLENTGE, Stefan, 60596 Frankfurt am Main (DE)
(74) Vertreter: Ullrich & Naumann PartG mbB

(57) **Zusammenfassung**

Die Erfindung betrifft eine Sensoreinrichtung (4) zum Bestimmen eines Öffnungsgrads eines Ventils (2) einer Armatur (1), insbesondere eines Hydranten, mit einer Anordnung umfassend zumindest einen Magnetfeldsensor (11), insbesondere Hall-Sensor, und einen einzigen mit dem zumindest einen Magnetfeldsensor (11) interagierenden Permanentmagnet (12), wobei die Armatur (1) ein Armaturgehäuse (5) und eine gegenüber dem Armaturgehäuse (5), zwischen einer Geschlossen-Position und einer Offen-Position bewegbare Bedieneinrichtung (3), insbesondere umfassend eine drehbare Spindel (7), für das Ventil (2) aufweist, wobei der Permanentmagnet (12) in und/oder an dem Armaturgehäuse (5) und der zumindest eine Magnetfeldsensor (11) in und/oder an der Bedieneinrichtung (3) anordenbar ist, oder wobei der zumindest eine Magnetfeldsensor (11) in und/oder an dem Armaturgehäuse (5) und der Permanentmagnet (12) in und/oder an der Bedieneinrichtung (3) anordenbar ist, derart, dass in einem angeordneten Zustand bei einem Betätigen der Bedieneinrichtung (3) durch den zumindest einen Magnetfeldsensor (11) zumindest ein Abstandssignal, welches einer Abstandsänderung zwischen dem Permanentmagnet (12) und einem des zumindest einen Magnetfeldsensors (11) zuordenbar ist, erfassbar ist, wobei basierend auf dem zumindest einen Abstandssignal der Öffnungsgrad des Ventils (2) bestimmbar ist. Des Weiteren sind eine Armatur (1) und ein Verfahren zum Bestimmen eines Öffnungsgrads eines Ventils (2) einer Armatur (1) beansprucht.

## Beschreibung

Die Erfindung betrifft eine Sensoreinrichtung zum Bestimmen eines Öffnungsgrads eines Ventils einer Armatur, insbesondere eines Hydranten.

Des Weiteren betrifft die Erfindung eine Armatur, insbesondere Hydrant, mit einem Ventil, einer Bedieneinrichtung für das Ventil und einer solchen Sensoreinrichtung. Zudem hat die vorliegende Erfindung ein Verfahren zum Bestimmen eines Öffnungsgrads eines Ventils einer Armatur insbesondere mit einer solchen Sensoreinrichtung zum Gegenstand.

Hydranten sind meist als Unterflurhydranten, die unterhalb der Erdoberfläche in einer Bodenwanne oder einem Schacht installiert sind, oder als Überflurhydraten, die oberhalb der Erdoberfläche mit einer vertikalen Erstreckung installiert sind, ausgebildet. Im Rahmen der routinemäßigen Wartung solcher Hydranten kann es erforderlich sein den Öffnungsgrad zu überprüfen, um sicherzustellen, dass das Ventil nicht aufgrund einer Fehlfunktion oder sonstiger äußerer Einwirkungen, wie Vandalismus, geöffnet ist. Des Weiteren kann es erforderlich sein, die ordnungsgemäße Funktionsfähigkeit des Ventils zu überprüfen. Denn durch Schmutz, Ablagerungen oder Verstopfungen können die Ventile schwergängig werden oder sogar feststecken. Solche Hydranten weisen jedoch in der Regel keine Einrichtung zur visuellen Bestimmung des Öffnungsgrads, wie beispielsweise Markierungen, auf. Somit ist die Bestimmung des Öffnungsgrads nur schwer möglich.

Zur einfacheren Bestimmung des Öffnungsgrads eines Ventils von Hydranten können Sensoreinrichtungen, die am Hydranten verbaut sind, verwendet werden. Solche Sensoreinrichtungen sind seit Jahren aus der Praxis bekannt. Problematisch ist, dass diese Sensoreinrichtungen aufgrund ihrer hohen Komplexität störungsanfällig sind. Zudem können im Fall einer Reparatur solcher Sensoreinrichtungen hohe Reparaturkosten entstehen.

Der vorliegenden Erfindung liegt daher die Aufgabe zugrunde, eine Sensoreinrichtung der eingangs genannten Art derart auszugestalten und weiterzubilden, dass mit konstruktiv einfachen Mitteln der Öffnungsgrad eines Ventils einer Armatur zuverlässig bestimmt werden kann. Des Weiteren sollen eine Armatur und ein Verfahren zum Bestimmen eines Öffnungsgrads eines Ventils einer Armatur angegeben werden.

Erfindungsgemäß ist die voranstehende Aufgabe durch die Merkmale des Anspruches 1 gelöst. Danach betrifft die Erfindung eine Sensoreinrichtung zum Bestimmen eines Öffnungsgrads eines Ventils einer Armatur, insbesondere eines Hydranten, mit einer Anordnung umfassend zumindest einen Magnetfeldsensor, insbesondere Hall-Sensor, und einen einzigen mit dem zumindest einen Magnetfeldsensor interagierenden Permanentmagnet, wobei die Armatur ein Armaturgehäuse und eine gegenüber dem Armaturgehäuse, zwischen einer Geschlossen-Position und einer Offen-Position bewegbare Bedieneinrichtung, insbesondere umfassend eine drehbare Spindel, für das Ventil aufweist, wobei der Permanentmagnet in und/oder an dem Armaturgehäuse und der zumindest eine Magnetfeldsensor in und/oder an der Bedieneinrichtung anordenbar ist, oder wobei der zumindest eine Magnetfeldsensor in und/oder an dem Armaturgehäuse und der Permanentmagnet in und/oder an der Bedieneinrichtung anordenbar ist, derart, dass in einem angeordneten Zustand bei einem Betätigen der Bedieneinrichtung durch den zumindest einen Magnetfeldsensor zumindest ein Abstandssignal, welches einer Abstandsänderung zwischen dem Permanentmagnet und einem des zumindest einen Magnetfeldsensors zuordenbar ist, erfassbar ist, wobei basierend auf dem zumindest einen Abstandssignal der Öffnungsgrad des Ventils bestimmbar ist.

Die voranstehende Aufgabe ist des Weiteren durch eine Armatur mit den Merkmalen des nebengeordneten Anspruchs 11 gelöst. Diese Armatur, insbesondere Hydrant, weist ein Ventil, eine Bedieneinrichtung für das Ventil und eine Sensoreinrichtung gemäß einem der Ansprüche 1 bis 10 auf.

Hinsichtlich eines Verfahrens zum Bestimmen eines Öffnungsgrads eines Ventils einer Armatur ist die voranstehende Aufgabe durch die Merkmale des nebengeordneten Anspruchs 12 gelöst. Danach umfasst das in Rede stehende Verfahren zum Bestimmen eines Öffnungsgrads eines Ventils einer Armatur, insbesondere eines Hydranten, mit einer Sensoreinrichtung, insbesondere einer Sensoreinrichtung gemäß einem der Ansprüche 1 bis 10, wobei die Sensoreinrichtung eine Anordnung mit zumindest einem Magnetfeldsensor und einem einzigen mit dem zumindest einen Magnetfeldsensor interagierenden Permanentmagnet umfasst, und wobei die Armatur ein Armaturgehäuse und eine gegenüber dem Armaturengehäuse, zwischen einer Geschlossen-Position und einer Offen-Position bewegbare Bedieneinrichtung, insbesondere umfassend eine drehbare Spindel, für das Ventil aufweist, wobei der Permanentmagnet in und/oder an dem Armaturgehäuse und der zumindest eine Magnetfeldsensor in und/oder an der Bedieneinrichtung angeordnet ist, oder wobei der zumindest eine Magnetfeldsensor in und/oder an dem Armaturgehäuse und der Permanentmagnet in und/oder an der Bedieneinrichtung angeordnet ist, die Schritte:
- Betätigen der Bedieneinrichtung;
- Erfassen zumindest eines Abstandssignals, welches einer Abstandsänderung zwischen dem Permanentmagnet und dem zumindest einen Magnetfeldsensor zuordenbar ist, durch den zumindest einen Magnetfeldsensor; und
- Bestimmen des Öffnungsgrads des Ventils basierend auf dem erfassten zumindest einen Abstandssignal.

**In** erfindungsgemäßer Weise ist zunächst erkannt worden, dass die voranstehende Aufgabe verblüffend einfach durch die Anordnung eines einzigen Permanentmagnets gelöst werden kann. Mithilfe eines einzigen Permanentmagnets kann eine zuverlässige Bestimmung des Öffnungsgrads mit einer hohen Genauigkeit sichergestellt werden. Dabei weist die Sensoreinrichtung mit nur einem einzigen Permanentmagnet eine geringe Komplexität auf. Durch das Betätigen der Bedieneinrichtung ändert sich eine relative Position des Permanentmagnets und des zumindest einen Magnetfeldsensors zueinander. Der zumindest eine Magnetfeldsensor kann dabei kontinuierlich über die Zeit Signalwerte des zumindest einen Abstandssignals erfassen, die proportional zu einer Magnetfeldstärke des Permanentmagnets sind. Die Signalwerte können einer messbaren Spannungsdifferenz in einem stromdurchflossenen Leiter, welcher sich in einem Magnetfeld befindet, zugeordnet sein. Der Betrag des erfassten Signalwerts bzw. der Magnetfeldstärke ist umso höher, je geringer der Abstand des Permanentmagnets zu dem zumindest einen Magnetfeldsensor ist. Somit sind kontinuierlich Signalwerte des zumindest einen Abstandssignals erfassbar, wobei auf Grundlage der Signalwerte Positionen des Permanentmagnets und des zumindest einen Magnetfeldsensors zueinander ermittelbar sind, die einem maximalen Abstand, einem minimalen Abstand oder einem zwischen dem minimalen und dem maximalen Abstand liegenden Abstand zugeordnet werden können. Anhand dieser Informationen lässt sich sodann, insbesondere ausgehend von einer initialen Geschlossen-Position oder einer initialen Offen-Position des Ventils, der Öffnungsgrad des Ventils nach dem Bedienen der Bedieneinrichtung bestimmen. Es ist denkbar, dass anhand des zumindest einen Abstandssignals zumindest ein dem minimalen Abstand zugeordnetes Annäherungsereignis bestimmbar ist, wobei basierend auf dem zumindest einen Annäherungsereignis der Öffnungsgrad des Ventils bestimmbar ist.

In dem Fall, in dem der Permanentmagnet in und/oder an dem Armaturgehäuse und der zumindest eine Magnetfeldsensor in und/oder an der Bedieneinrichtung angeordnet ist, wird der zumindest eine Magnetfeldsensor beim Betätigen der Bedieneinrichtung entlang eines Pfads bewegt. Somit ist auf Grundlage des Abstandssignals die Position des zumindest einen Magnetfeldsensors auf dem Pfad ermittelbar. Bei einer solchen Anordnung kann die Sensoreinrichtung besonders einfach bei bestehenden Armaturen nachgerüstet werden. Dazu kann die Bedieneinrichtung ausgebaut werden und sodann der zumindest eine Magnetfeldsensor einschließlich etwaiger Leitungskabel in und/oder an der nun einfach zugänglichen Bedieneinrichtung verbaut werden. Der Permanentmagnet kann mit geringem Aufwand in und/oder an dem Armaturgehäuse festgelegt werden.

In dem Fall, in dem der zumindest eine Magnetfeldsensor in und/oder an dem Armaturgehäuse und der Permanentmagnet in und/oder an der Bedieneinrichtung anordenbar ist, wird der Permanentmagnet beim Betätigen der Bedieneinrichtung entlang eines Pfads bewegt. Somit ist auf Grundlage des zumindest einen Abstandssignals die Position des Permanentmagnets auf dem Pfad ermittelbar. Bei einer solchen Anordnung ist vorteilhaft, dass dem zumindest einen Magnetfeldsensor zugeordnete Leitungskabel während des Betätigens der Bedieneinrichtung stationär am Armaturgehäuse angeordnet sein können. Dadurch kann die Wahrscheinlichkeit von Beschädigungen an der Sensoreinrichtung infolge von Bewegungen der Bedieneinrichtung reduziert werden.

Es wird darauf hingewiesen, dass der Permanentmagnet und/oder der zumindest eine Magnetfeldsensor mittel- oder unmittelbar an der Bedieneinrichtung und/oder an dem Armaturgehäuse anordenbar sind.

Der Begriff "Öffnungsgrad" ist im Rahmen der vorliegenden Offenbarung im weitesten Sinn zu verstehen und betrifft das Ausmaß, in dem das Ventil geöffnet ist und es Fluid, wie Flüssigkeit oder Gas, ermöglicht, durch das Fluidsystem zu strömen. Der Öffnungsgrad kann in Form des Verhältnisses eines bestimmten Bewegungswegs, insbesondere in Form einer Öffnungsstrecke oder eines Öffnungswinkels, der Bedieneinrichtung zu einem bekannten maximalen Bewegungsweg, insbesondere in Form einer maximalen Öffnungsstrecke oder eines maximalen Öffnungswinkels, der Bedieneinrichtung angegeben werden, insbesondere wobei der maximale Bewegungsweg der Offen-Position zugeordnet ist. Der Bewegungsweg kann mit anderen Worten eine bestimmte Position entlang einer Wegstrecke beschreiben. In diesem Zusammenhang kann beispielsweise ein mithilfe der Sensoreinrichtung ermittelter Bewegungsweg der Bedieneinrichtung in Form eines Öffnungswinkels 180° betragen. Bei einem Öffnungswinkel von 180° und einem maximalen Bewegungsweg bzw. Öffnungswinkel von beispielsweise 360°, welcher der Offen-Position des Ventils entsprechen kann, beträgt der daraus ermittelte Öffnungsgrad somit 180°/360° = 50 %. Es wird darauf hingewiesen, dass nicht zwangsweise ein linearer Zusammenhang zwischen dem Öffnungsgrad und dem Volumenstrom bestehen muss.

In vorteilhafter Weise kann zumindest ein an der Armatur, insbesondere der Bedieneinrichtung, anordenbarer Beschleunigungssensor zum Erfassen eines Neigungswinkels der Armatur vorgesehen sein, vorzugsweise wobei durch den zumindest einen Beschleunigungssensor im angeordneten Zustand eine Beschleunigung in zumindest einer Richtung erfassbar ist. Dadurch ist ein Neigungswinkel der Armatur gegenüber der Vertikalen bzw. der Horizontalen erfassbar, sodass eine Beschädigung der Armatur, beispielsweise infolge eines Fahrzeuganpralls oder dergleichen, erkannt werden kann.

In weiter vorteilhafter Weise kann eine in und/oder an der Armatur anordenbare Auswerteeinrichtung, insbesondere zum Verarbeiten von Signalen des zumindest einen Magnetfeldsensors und/oder des zumindest einen Beschleunigungssensors, vorgesehen sein. Die Auswerteeinrichtung kann unabhängig von dem zumindest einen Magnetfeldsensor unter Berücksichtigung des geringen zur Verfügung stehenden Platzes positioniert werden, wodurch die Flexibilität bei der Systemgestaltung und Installation erhöht werden kann.

Gemäß einer vorteilhaften Weiterbildung kann der zumindest eine Magnetfeldsensor und/oder der Permanentmagnet und/oder die Auswerteeinrichtung und/oder der zumindest eine Beschleunigungssensor als eine zusammengefügte, insbesondere ringförmige, Elektronikeinrichtung mit einem Trägerelement ausgebildet sein. Einer der dadurch erzielten Vorteile ist, dass die Sensoreinrichtung, insbesondere bei einem Nachrüsten, einfach und schnell in und/oder an der Armatur festlegbar ist.

Es ist denkbar, dass zumindest ein Teil der Komponenten der Elektronikeinrichtung durch eine stoffschlüssige Verbindung, insbesondere eine Kleb-, Löt- oder Schweißverbindung, und/oder eine form- und/oder kraftschlüssige Verbindung, insbesondere eine geschraubte und/oder geklemmte Verbindung, an und/oder in dem Trägerelement festgelegt sind. Dies ermöglicht eine besonders einfache und schnelle Montage. Klebverbindungen zeichnen sich darüber hinaus durch gute Dämpfungseigenschaften aus, wodurch ein zuverlässiger Betrieb des zumindest einen Magnetfeldsensors sichergestellt werden kann. Die geschraubte Verbindung kann beispielweise zumindest eine an dem Armaturgehäuse oder der Bedieneinrichtung anordenbare bauraumsparende Madenschraube umfassen. Durch eine geschraubte und/oder geklemmte Verbindung ist der Teil der Elektronikkomponenten von dem Trägerelement lösbar, sodass Reparaturen einfach durchgeführt werden können.

Alternativ oder zusätzlich ist denkbar, dass das Trägerelement durch eine stoffschlüssige Verbindung, insbesondere eine Kleb-, Löt- oder Schweißverbindung, an und/oder in der Bedieneinrichtung festlegbar ist. Dies ermöglicht ebenfalls eine besonders einfache und schnelle Montage. Klebverbindungen zeichnen sich darüber hinaus durch gute Dämpfungseigenschaften aus, wodurch ein zuverlässiger Betrieb des zumindest einen Magnetfeldsensors sichergestellt werden kann.

Des Weiteren kann das Trägerelement durch eine form- und/oder kraftschlüssige Verbindung, insbesondere eine geschraubte und/oder geklemmte Verbindung oder eine Schrumpfverbindung, an und/oder in der Bedieneinrichtung festlegbar sein. Die geschraubte Verbindung kann beispielweise zumindest eine an dem Armaturgehäuse oder der Bedieneinrichtung anordenbare bauraumsparende Madenschraube umfassen. Durch eine geschraubte und/oder geklemmte Verbindung ist das Trägerelement bzw. sind die daran angeordneten Komponenten der Elektronikeinrichtung von der Bedieneinrichtung lösbar, sodass Reparaturen einfach durchgeführt werden können. Eine Schrumpfverbindung ermöglicht eine besonders schnelle Montage des Trägerelements.

Es kann vorteilhaft sein, dass die Bedieneinrichtung durch ein Drehen um eine Drehachse betätigbar ist, insbesondere wobei der zumindest eine Magnetfeldsensor und/oder der Permanentmagnet bezogen auf die Drehachse exzentrisch anordenbar sind. Die Sensoreinrichtung kann einfach an einer solchen Bedieneinrichtung installiert werden. Bei einer exzentrischen Anordnung kann das durch den zumindest einen Magnetfeldsensor erfasste zumindest eine Abstandssignal besonders zuverlässig einer Abstandsänderung zugeordnet werden. Dies ist darauf zurückzuführen, dass die Signalwerte, die mit dem Abstand zwischen dem Permanentmagnet und dem zumindest einen Magnetfeldsensor korrelieren, während der Betätigung der Bedieneinrichtung, verglichen mit den während der Messung auftretenden Messungenauigkeiten, großen Änderungen unterliegen.

In weiter vorteilhafter Weise sind zumindest drei Magnetfeldsensoren vorgesehen. Dadurch kann der Öffnungsgrad besonders zuverlässig und mit einer hohen Genauigkeit bestimmt werden. Zudem kann anhand der durch die drei Magnetfeldsensoren erfassten Abstandssignale, insbesondere Annäherungsereignisse, und diesen zugeordneten Erfassungszeiten die Bewegungsrichtung der Bedieneinrichtung, insbesondere die Drehrichtung einer Spindel, bestimmt werden.

Im Hinblick auf eine konstruktiv besonders einfache Ausgestaltung können die zumindest drei Magnetfeldsensoren äquidistant zueinander beabstandet, insbesondere entlang einer Kreislinie, positionierbar sein.

Zur Reduzierung des Energieverbrauchs kann es zweckmäßig sein, dass der zumindest eine Magnetfeldsensor und/oder der zumindest eine Beschleunigungssensor dazu ausgebildet sind, sich bei Erfassen eines Signalwerts ober- oder unterhalb eines definierbaren Schwellsignalwerts von einem Ruhezustand in einen Aktivzustand zu versetzen und vorzugsweise ein nachfolgend erfasstes Abstandssignal an die Auswerteeinrichtung zu übermitteln.

Gemäß einer vorteilhaften Weiterbildung kann die Auswerteeinrichtung eine Batterie zur Energieversorgung aufweisen. Dadurch kann auf eine aufwendige kabelgebundene Stromversorgung verzichtet werden.

Die Auswerteeinrichtung kann ein Kommunikationsmittel, beispielsweise basierend auf NFC, Bluetooth, RFID oder dergleichen, aufweisen. Dabei kann das Kommunikationsmittel prinzipiell ausgebildet sein, mit dem zumindest einen Magnetfeldsensor über physische Leitungen und/oder eine drahtlose Verbindung zu kommunizieren. Darüber hinaus ist denkbar, dass das Kommunikationsmittel ausgebildet ist, über physische Leitungen und/oder eine drahtlose Verbindung mit einem in der Nähe der Sensoreinrichtung befindlichen externen Bediengerät eines Benutzers zu kommunizieren. Mithilfe von NFC, Bluetooth, RFID kann eine drahtlose Verbindung mit einem niedrigen Energieverbrauch bereitgestellt werden. Zudem ist denkbar, dass das Kommunikationsmittel ausgebildet ist, mit einem externen zentralen Überwachungssystem zu kommunizieren.

Im Hinblick auf eine besonders einfache Konstruktion der Sensoreinrichtung können der zumindest eine Magnetfeldsensor und/oder der Permanentmagnet und/oder der zumindest eine Beschleunigungssensor auf einer gleichen Höhe oder auf unterschiedlichen Höhen, insbesondere in Richtung einer Erstreckungsrichtung der Spindel zueinander beabstandet, anordenbar sein. Der Permanentmagnet kann dabei vorzugsweise ober- oder unterhalb des zumindest einen Magnetfeldsensors anordenbar sein, vorzugsweise derart, dass eine durch einen Nordpol und einen Südpol gebildete Magnetachse des Permanentmagnets parallel zu der Erstreckungsrichtung der Spindel verläuft. Insbesondere könnte dabei der Permanentmagnet an einem im und/oder am Armaturgehäuse festlegbaren Deckelelement anordenbar bzw. angeordnet sein. Zusätzlich könnte das Deckelelement dazu ausgebildet sein, einen wasserführenden Bereich des Hydranten gegenüber einem nicht wasserführenden Bereich des Hydranten abzudichten. Alternativ oder zusätzlich könnte das Deckelelement eine Durchführung für eine Spindel der Bedieneinrichtung aufweisen, vorzugsweise wobei die Spindel in dem Deckelelement gelagert ist.

In vorteilhafter Weise kann beim Bestimmen des Öffnungsgrads basierend auf dem zumindest einen erfassten Abstandssignal zumindest ein Positions-Zeit-Wert der Bedieneinrichtung bestimmt werden, wobei basierend auf dem zumindest einen Positions-Zeit-Wert und einem bekannten initialen Positions-Zeit-Wert ein mit dem Öffnungsgrad korrespondierender Bewegungsweg und/oder eine mit dem Öffnungsgrad korrespondierende Bewegungsrichtung der Bedieneinrichtung bestimmt werden, insbesondere wobei der initiale Positions-Zeit-Wert der Geschlossen- oder der Offen-Position zugeordnet ist. Somit kann mit einem geringen Rechen- und Speicheraufwand der Öffnungsgrad bestimmt werden. Der zumindest eine Positions-Zeit-Wert der Bedieneinrichtung kann mit einem minimalen oder einem maximalen Abstand des Permanentmagnets zu dem zumindest einen Magnetfeldsensor korrespondieren.

In weiter vorteilhafter Weise können zumindest drei Magnetfeldsensoren vorgesehen sein, wobei durch zumindest zwei der zumindest drei Magnetfeldsensoren jeweils zumindest ein Abstandssignal erfasst wird, wobei beim Bestimmen des Öffnungsgrads basierend auf den zumindest zwei erfassten Abstandssignalen jeweils zumindest ein Positions-Zeit-Wert der Bedieneinrichtung bestimmt wird, wobei basierend auf den bestimmten zumindest zwei Positions-Zeit-Werten ein mit dem Öffnungsgrad korrespondierender Bewegungsweg und/oder eine mit dem Öffnungsgrad korrespondierende Bewegungsrichtung der Bedieneinrichtung bestimmt werden. Ein solches Verfahren ist ebenfalls mit einem geringen Rechen- und Speicheraufwand verbunden. Zudem ist ein solches Verfahren besonders gut bei einer Sensoreinrichtung mit einem einzigen Permanentmagnet geeignet.

Des Weiteren ist denkbar, dass durch einen an der Armatur, insbesondere der Bedieneinrichtung, angeordneten zumindest einen Beschleunigungssensor ein aktueller Beschleunigungsvektor ermittelt wird und dass basierend auf einem bekannten initialen Beschleunigungsvektor und dem aktuellen Beschleunigungsvektor ein aktueller Neigungswinkel der Armatur bestimmt wird. Anhand des Neigungswinkels der Armatur gegenüber der Vertikalen kann eine Beschädigung der Armatur, beispielsweise infolge eines Fahrzeuganpralls oder dergleichen, erkannt werden.

Zur verbesserten Erfassung des Öffnungsgrads durch den Benutzer kann der Öffnungsgrad aus dem Verhältnis des bestimmten Bewegungswegs, insbesondere in Form einer Öffnungsstrecke oder eines Öffnungswinkels, zu einem bekannten maximalen Bewegungsweg, insbesondere in Form einer maximalen Öffnungsstrecke oder eines maximalen Öffnungswinkels, berechnet werden, insbesondere wobei der maximale Bewegungsweg der Offen-Position zugeordnet ist.

Die hier beschriebene Offenbarung betrifft zusätzlich ein Verfahren zum Einrichten der Sensoreinrichtung gemäß einem der Ansprüche 1 bis 10, insbesondere bei einer Erstinbetriebnahme, umfassend die Schritte:
- Bereitstellen der Offen-Position des Ventils mithilfe der Bedieneinrichtung; und
- Ermitteln eines maximalen Bewegungswegs der Bedieneinrichtung durch Referenzieren der Offen-Position auf einen ersten aktuellen Bewegungsweg der Bedieneinrichtung.

In vorteilhafter Weise kann das Verfahren zum Einrichten der Sensoreinrichtung die weiteren, insbesondere zeitlich vorhergehenden, Schritte umfassen:
- Bereitstellen der Geschlossen-Position des Ventils mithilfe der Bedieneinrichtung; und
- Ermitteln eines minimalen Bewegungswegs der Bedieneinrichtung durch Referenzieren der Geschlossen-Position auf einen zweiten aktuellen Bewegungsweg der Bedieneinrichtung.

In Bezug auf eine Bedieneinrichtung mit einer Spindel wird mit anderen Worten ein maximaler Öffnungswinkel in dem vollständig geöffneten Zustand der Bedieneinrichtung und/oder ein minimaler Öffnungswinkel in dem vollständig geschlossenen Zustand der Bedieneinrichtung als Referenz gespeichert. Zum nachfolgenden Bestimmen des Öffnungsgrads wird beispielsweise zunächst ein aktueller Öffnungswinkel anhand des zumindest einen erfassten Abstandssignals und eines initialen Öffnungswinkels, beispielsweise des minimalen Öffnungswinkels (Geschlossen-Position), ermittelt. Der Öffnungsgrad ergibt sich dann aus dem Verhältnis des aktuellen Öffnungswinkels zu dem maximalen Öffnungswinkel. Dabei ist lediglich ein einziger Permanentmagnet erforderlich, um die Sensoreinrichtung zuverlässig und mit einer hohen Genauigkeit einzurichten.

In weiter vorteilhafter Weise kann das Verfahren zum Einrichten der Sensoreinrichtung durch ein externes Bediengerät, beispielswiese ein Smartphone, über eine Drahtlosverbindung mit der Auswerteeinrichtung initialisiert werden.

Vorzugsweise basiert die Kommunikation zwischen dem Bediengerät und der Auswerteeinrichtung auf NFC. Dabei ist denkbar, dass das Referenzieren der Offen-Position und/oder der Geschlossen-Position mithilfe des externen Bediengeräts gesteuert wird.

Des Weiteren kann das Verfahren zum Einrichten der Sensoreinrichtung ein Ermitteln zumindest eines initialen Beschleunigungsvektors durch den zumindest einen Beschleunigungssensor und ein Referenzieren des zumindest einen initialen Beschleunigungsvektors auf zumindest einen initialen Neigungswinkel umfassen. Dabei ist denkbar, dass das Referenzieren des zumindest einen initialen Beschleunigungsvektors mithilfe des externen Bediengeräts erfolgt.

Die erfindungsgemäße Sensoreinrichtung und die erfindungsgemäße Armatur kann verfahrensgemäß geprägte Merkmale aufweisen, so dass das erfindungsgemäße Verfahren die in den Ansprüchen, der voranstehenden allgemeinen Beschreibung sowie der nachstehenden Figurenbeschreibung enthaltenen Merkmale und die damit erreichten Vorteile der erfindungsgemäßen Sensoreinrichtung und der erfindungsgemäßen Armatur aufweisen kann.

Es gibt nun verschiedene Möglichkeiten, die Lehre der vorliegenden Erfindung in vorteilhafter Weise auszugestalten und weiterzubilden. Dazu ist einerseits auf die den Ansprüchen 1 und 12 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in schematischer, geschnittener Darstellung ein Ausführungsbeispiel einer erfindungsgemäßen Armatur mit einer erfindungsgemäßen Sensoreinrichtung in einer Seitenansicht,
- Fig. 2: in schematischer, geschnittener Darstellung das Ausführungsbeispiel der erfindungsgemäßen Sensoreinrichtung gemäß Fig. 1 im angeordneten Zustand in einer Seitenansicht,
- Fig. 3: in schematischer, geschnittener Darstellung das Ausführungsbeispiel der erfindungsgemäßen Sensoreinrichtung gemäß Fig. 1 im angeordneten Zustand in einer Draufsicht, und
- Fig. 4: Schritte eines Ausführungsbeispiels eines erfindungsgemäßen Verfahrens der vorliegenden Erfindung.

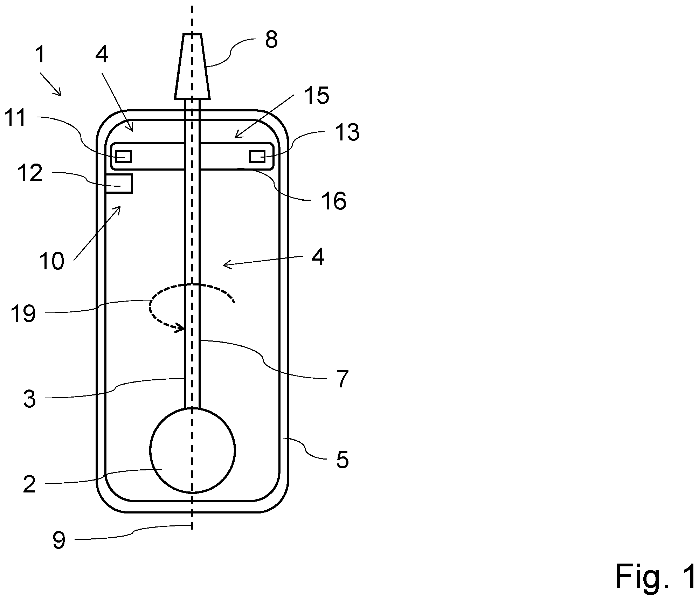

Fig. 1 zeigt in schematischer, geschnittener Darstellung ein Ausführungsbeispiel einer erfindungsgemäßen Armatur mit einer erfindungsgemäßen Sensoreinrichtung in einer Seitenansicht.

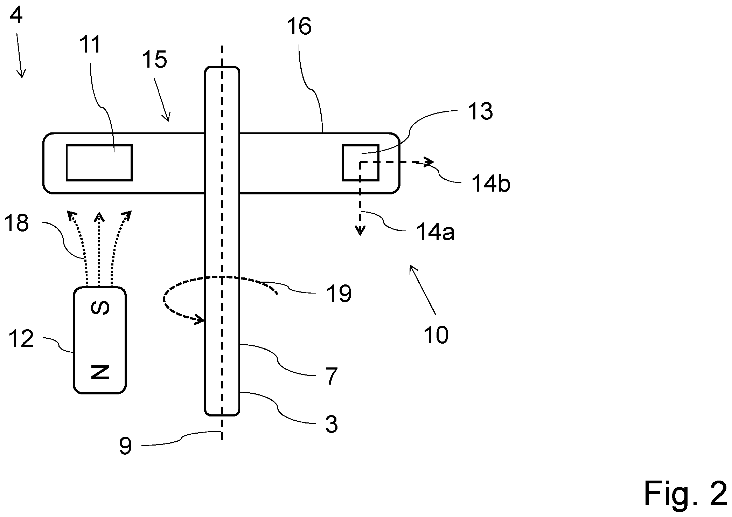

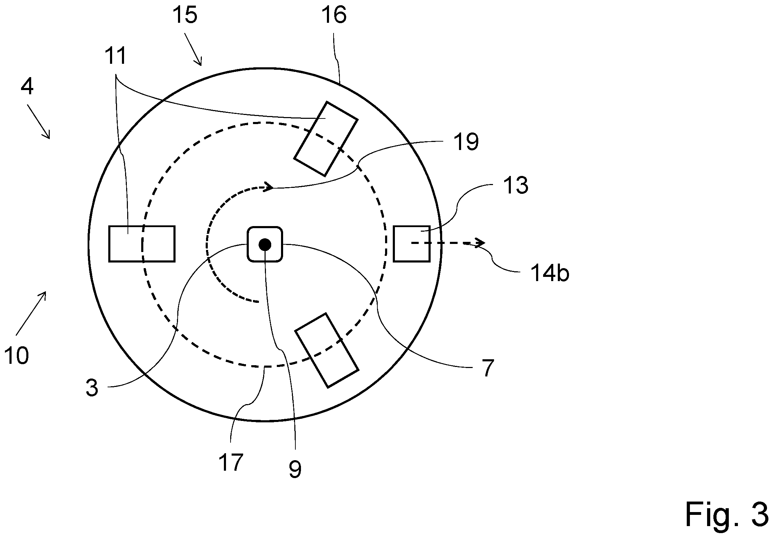

Fig. 2 und 3 zeigen in schematischer, geschnittener Darstellung das Ausführungsbeispiel der erfindungsgemäßen Sensoreinrichtung gemäß Fig. 1 im angeordneten Zustand in einer Seitenansicht und einer Draufsicht.

In Fig. 1 ist eine Armatur 1 in Form eines Überflurhydraten mit einem Ventil 2, einer Bedieneinrichtung 3 für das Ventil 2 und einer Sensoreinrichtung 4 dargestellt. Die Bedieneinrichtung 3 ist gegenüber einem Armaturgehäuse 5 zwischen einer Geschlossen-Position und einer Offen-Position bewegbar. Dazu umfasst die Bedieneinrichtung 3 als Teil einer Innengarnitur 6 eine Spindel 7, die an einem oberen Ende eine Mehrkantaufnahme 8 zum Ansetzen eines Werkzeugs aufweist. Die Bedieneinrichtung 3 ist somit durch ein Drehen der Spindel 7 um eine Drehachse 9 betätigbar.

Die Sensoreinrichtung 4 weist eine Anordnung 10 umfassend drei Magnetfeldsensoren 11 in Form von Hall-Sensoren und einen einzigen mit den drei Magnetfeldsensoren 11 interagierenden Permanentmagnet 12 auf. Dabei sind der Permanentmagnet 12 an dem Armaturgehäuse 5 und die drei Magnetfeldsensoren 11 an der Bedieneinrichtung 3 angeordnet. Der Permanentmagnet 12 weist einen Nordpol (N) und einen Südpol (S) auf, wobei der Südpol (S) den an der Bedieneinrichtung 3 angeordneten Komponenten der Sensoreinrichtung 4 zugewandt ist (siehe Fig. 2 und 3). Alternativ ist denkbar, dass der Nordpol (N) den an der Bedieneinrichtung 3 angeordneten Komponenten der Sensoreinrichtung 4 zugewandt ist.

Des Weiteren umfasst die Sensoreinrichtung 4 einen an der Bedieneinrichtung 3 angeordneten Beschleunigungssensor 13 zum Erfassen eines Neigungswinkels der Armatur 1, wobei durch den Beschleunigungssensor 13 eine Beschleunigung in zwei senkrecht zueinander liegenden Richtungen 14a, 14b erfassbar ist. Anhand der den Richtungen 14a, 14b zugeordneten Beschleunigungskomponenten kann der Neigungswinkel gegenüber der Vertikalen bestimmt werden. Eine hier nicht dargestellte Auswerteeinrichtung zum Verarbeiten von Signalen der drei Magnetfeldsensoren 11 und des Beschleunigungssensors 13 ist an der Bedieneinrichtung 3 angeordnet.

Die Magnetfeldsensoren 11 und der Beschleunigungssensor 13 sind auf einer gleichen Höhe angeordnet (siehe Fig. 2). Dagegen ist der Permanentmagnet 12 in Richtung einer Erstreckungsrichtung der Spindel 7 unter den Magnetfeldsensoren 11 beabstandet angeordnet. Der Permanentmagnet 12 ist dabei derart unterhalb der Magnetfeldsensoren 11 angeordnet, dass eine durch den Nordpol (N) und einen Südpol (S) gebildete Magnetachse des Permanentmagnets 12 parallel zu der Erstreckungsrichtung der Spindel 7 verläuft.

Wie aus Fig. 3 ersichtlich ist, sind die drei Magnetfeldsensoren 11 und der Beschleunigungssensor 13 als eine zusammengefügte, ringförmige Elektronikeinrichtung 15 mit einem Trägerelement 16 ausgebildet. Die Magnetfeldsensoren 11 sind äquidistant zueinander entlang einer Kreislinie 17 beabstandet positioniert und bezogen auf die Drehachse 9 exzentrisch angeordnet. Somit sind die Magnetfeldsensoren 11 in einem Winkel von 120° zueinander beabstandet.

Das Trägerelement 16 ist um die Spindel 7 der Bedieneinrichtung 3 angeordnet, sodass ein Drehen der Spindel 7 in einem Drehen des Trägerelements 16 resultiert. Während des Drehens werden die Magnetfeldsensoren 11 an dem Permanentmagnet 12 vorbeigeführt, wobei die Magnetfeldsensoren 11 das Magnetfeld 18 des Permanentmagnets 12 erfassen können. Durch die drei Magnetfeldsensoren 11 ist dabei jeweils ein Abstandssignal erfassbar, welches einer Abstandsänderung zwischen dem Permanentmagnet 12 und dem entsprechenden Magnetfeldsensor 11 zuordenbar ist. Basierend auf den Abstandssignalen kann der Öffnungsgrad des Ventils 2 bestimmt werden.

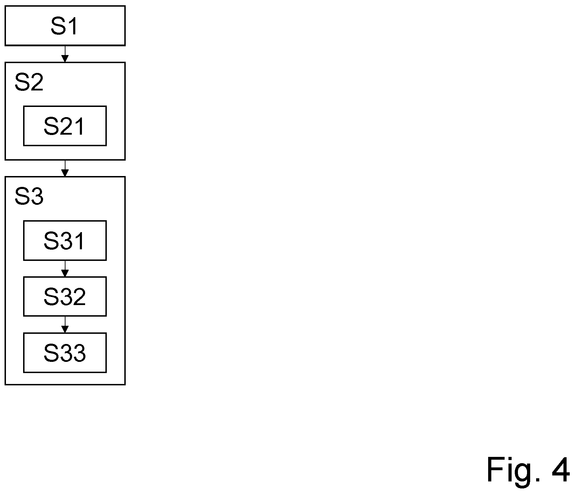

Fig. 4 zeigt Schritte eines Ausführungsbeispiels eines erfindungsgemäßen Verfahrens der vorliegenden Erfindung.

Die Verfahrensschritte werden nachfolgend in Bezug auf die in den Fig. 1 bis 3 dargestellte Armatur 1 umfassend eine Bedieneinrichtung 3 mit einer Spindel 7 und eine Sensoreinrichtung 4 mit drei Magnetfeldsensoren 11 erläutert. Die Sensoreinrichtung 4 weist dabei lediglich einen einzigen Permanentmagnet 12 auf, der es ermöglicht den Öffnungsgrad zuverlässig und mit einer hohen Genauigkeit zu bestimmen.

In einem ersten Schritt S1 wird die Bedieneinrichtung 3 durch Drehen der Spindel 7 in einer Drehrichtung 19 ausgehend von einem initialen Öffnungswinkel, beispielsweise einem der Geschlossen-Position zugeordneten minimalen Öffnungswinkel, betätigt. Der minimale Öffnungswinkel kann im Rahmen eines Einrichtens der Sensoreinrichtung 4 zu 0° festgelegt worden sein.

Während des Drehens wird in Schritt S2 jeweils ein Abstandssignal durch die drei Magnetfeldsensoren 11 erfasst. Jedes Abstandssignal ist einer Abstandsänderung zwischen dem Permanentmagnet 12 und dem entsprechenden Magnetfeldsensor 11 zuordenbar. Dabei versetzen sich die Magnetfeldsensoren 11 bei Erfassen des ersten Abstandssignals, welches einen Signalwert oberhalb eines definierbaren Schwellsignalwerts umfasst, von einem Ruhezustand in einen Aktivzustand (S21).

In Schritt S3 wird der Öffnungsgrad des Ventils 2 basierend auf den drei erfassten Abstandssignalen bestimmt. Im Rahmen dieses Schrittes wird basierend auf den drei erfassten Abstandssignalen jeweils ein Positions-Zeit-Wert der Bedieneinrichtung 3 bestimmt (S31). Die Positions-Zeit-Werte entsprechen jeweils einem Annäherungsereignis mit einer Stellung der Spindel 7, wobei der Abstand des entsprechenden Magnetfeldsensors 11 zu dem Permanentmagnet 12 in diesem Fall minimal ist. Basierend auf den drei bestimmten Positions-Zeit-Werten und einem bekannten initialen Positions-Zeit-Wert werden in Schritt S32 ein mit dem Öffnungsgrad korrespondierender Öffnungswinkel und eine mit dem Öffnungsgrad korrespondierende Öffnungsrichtung der Spindel 7 bestimmt. Der Öffnungswinkel kann dabei aus einem bekannten initialen Öffnungswinkel von 0°, der der Geschlossen-Position entspricht, addiert mit einem Winkel von 240° zu 240° bestimmt werden. Der Winkel von 240° bestimmt sich aus der Summe der Winkelabstände zwischen dem ersten ausgelösten und dem zweiten ausgelösten Magnetfeldsensor 11 sowie zwischen dem zweiten ausgelösten und dem dritten ausgelösten Magnetfeldsensor 11.

Anhand des bestimmten Öffnungswinkels und der bestimmten Öffnungsrichtung wird unter Bezugnahme eines maximalen Öffnungswinkels der Öffnungsgrad bestimmt (S33).

Hinsichtlich weiterer vorteilhafter Ausgestaltungen der erfindungsgemäßen Sensoreinrichtung, der erfindungsgemäßen Armatur und des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Sensoreinrichtung, der erfindungsgemäßen Armatur und des erfindungsgemäßen Verfahrens lediglich zur Erörterung der beanspruchten Lehre dienen, diese jedoch nicht auf die Ausführungsbeispiele einschränken.

### Bezugszeichenliste

- 1: Armatur
- 2: Ventil
- 3: Bedieneinrichtung
- 4: Sensoreinrichtung
- 5: Armaturgehäuse
- 6: Innengarnitur
- 7: Spindel
- 8: Mehrkantaufnahme
- 9: Drehachse
- 10: Anordnung
- 11: Magnetfeldsensor
- 12: Permanentmagnet
- 13: Beschleunigungssensor
- 14a, 14b: Richtung der Beschleunigung
- 15: Elektronikeinrichtung
- 16: Trägerelement
- 17: Kreislinie
- 18: Magnetfeld
- 19: Drehrichtung

- N: Nordpol des Permanentmagnets
- S: Südpol des Permanentmagnets
- S1, S2, S21, S3, S31, S32, S33: Schritte des Verfahrens

## Patentansprüche

1. Sensoreinrichtung (4) zum Bestimmen eines Öffnungsgrads eines Ventils (2) einer Armatur (1), insbesondere eines Hydranten, mit einer Anordnung (10) umfassend zumindest einen Magnetfeldsensor (11), insbesondere Hall-Sensor, und einen einzigen mit dem zumindest einen Magnetfeldsensor (11) interagierenden Permanentmagnet (12),
wobei die Armatur (1) ein Armaturgehäuse (5) und eine gegenüber dem Armaturgehäuse (5), zwischen einer Geschlossen-Position und einer Offen-Position bewegbare Bedieneinrichtung (3), insbesondere umfassend eine drehbare Spindel (7), für das Ventil (2) aufweist,
wobei der Permanentmagnet (12) in und/oder an dem Armaturgehäuse (5) und der zumindest eine Magnetfeldsensor (11) in und/oder an der Bedieneinrichtung (3) anordenbar ist, oder
wobei der zumindest eine Magnetfeldsensor (11) in und/oder an dem Armaturgehäuse (5) und der Permanentmagnet (12) in und/oder an der Bedieneinrichtung (3) anordenbar ist,
derart, dass in einem angeordneten Zustand bei einem Betätigen der Bedieneinrichtung (3) durch den zumindest einen Magnetfeldsensor (11) zumindest ein Abstandssignal, welches einer Abstandsänderung zwischen dem Permanentmagnet (12) und einem des zumindest einen Magnetfeldsensors (11) zuordenbar ist, erfassbar ist,
wobei basierend auf dem zumindest einen Abstandssignal der Öffnungsgrad des Ventils (2) bestimmbar ist.

2. Sensoreinrichtung (4) nach Anspruch 1, **dadurch gekennzeichnet, dass** zumindest ein an der Armatur (1), insbesondere der Bedieneinrichtung (3), anordenbarer Beschleunigungssensor (13) zum Erfassen eines Neigungswinkels der Armatur (1) vorgesehen ist, vorzugsweise wobei durch den zumindest einen Beschleunigungssensor (13) im angeordneten Zustand eine Beschleunigung in zumindest einer Richtung (14a, 14b) erfassbar ist, und/oder
dass eine in und/oder an der Armatur (1) anordenbare Auswerteeinrichtung, insbesondere zum Verarbeiten von Signalen des zumindest einen Magnetfeldsensors (11) und/oder des zumindest einen Beschleunigungssensors (13), vorgesehen ist.

3. Sensoreinrichtung (4) nach einem der Ansprüche 1 oder 2, **dadurch gekennzeichnet, dass** der zumindest eine Magnetfeldsensor (11) und/oder der Permanentmagnet (12) und/oder die Auswerteeinrichtung und/oder der zumindest eine Beschleunigungssensor (13) als eine zusammengefügte, insbesondere ringförmige, Elektronikeinrichtung (15) mit einem Trägerelement (16) ausgebildet sind.

4. Sensoreinrichtung (4) nach Anspruch 3, **dadurch gekennzeichnet, dass** zumindest ein Teil der Komponenten (11, 12, 13) der Elektronikeinrichtung (15) durch eine stoffschlüssige Verbindung, insbesondere eine Kleb-, Löt- oder Schweißverbindung, und/oder eine form- und/oder kraftschlüssige Verbindung, insbesondere eine geschraubte und/oder geklemmte Verbindung, an und/oder in dem Trägerelement (16) festgelegt sind.

5. Sensoreinrichtung (4) nach Anspruch 3 oder 4, **dadurch gekennzeichnet, dass** das Trägerelement (16) durch eine stoffschlüssige Verbindung, insbesondere eine Kleb-, Löt- oder Schweißverbindung, an und/oder in der Bedieneinrichtung (3) festlegbar ist, und/oder
dass das Trägerelement (16) durch eine form- und/oder kraftschlüssige Verbindung, insbesondere eine geschraubte und/oder geklemmte Verbindung oder eine Schrumpfverbindung, an und/oder in der Bedieneinrichtung (3) festlegbar ist.

6. Sensoreinrichtung (4) nach einem der Ansprüche 1 bis 5, **dadurch gekennzeichnet, dass** die Bedieneinrichtung (3) durch ein Drehen um eine Drehachse (9) betätigbar ist, insbesondere wobei der zumindest eine Magnetfeldsensor (11) und/oder der Permanentmagnet (12) bezogen auf die Drehachse (9) exzentrisch anordenbar sind, und/oder
dass zumindest drei Magnetfeldsensoren (11) vorgesehen sind.

7. Sensoreinrichtung (4) nach Anspruch 6, **dadurch gekennzeichnet, dass** die zumindest drei Magnetfeldsensoren (11) äquidistant zueinander beabstandet, insbesondere entlang einer Kreislinie (17), positionierbar sind.

8. Sensoreinrichtung (4) nach einem der Ansprüche 2 bis 7, **dadurch gekennzeichnet, dass** der zumindest eine Magnetfeldsensor (11) und/oder der zumindest eine Beschleunigungssensor (13) dazu ausgebildet sind, sich bei Erfassen eines Signalwerts ober- oder unterhalb eines definierbaren Schwellsignalwerts von einem Ruhezustand in einen Aktivzustand zu versetzen und vorzugsweise ein nachfolgend erfasstes Abstandssignal an die Auswerteeinrichtung zu übermitteln.

9. Sensoreinrichtung (4) nach einem der Ansprüche 2 bis 8, **dadurch gekennzeichnet, dass** die Auswerteeinrichtung eine Batterie zur Energieversorgung aufweist, und/oder
dass die Auswerteeinrichtung ein Kommunikationsmittel, beispielsweise basierend auf NFC, Bluetooth, RFID oder dergleichen, aufweist.

10. Sensoreinrichtung (4) nach einem der Ansprüche 1 bis 9, **dadurch gekennzeichnet, dass** der zumindest eine Magnetfeldsensor (11) und/oder der Permanentmagnet (12) und/oder der zumindest eine Beschleunigungssensor (13) auf einer gleichen Höhe oder auf unterschiedlichen Höhen, insbesondere in Richtung einer Erstreckungsrichtung der Spindel (7) zueinander beabstandet, anordenbar sind.

11. Armatur (1), insbesondere Hydrant, mit einem Ventil (2), einer Bedieneinrichtung (3) für das Ventil (2) und einer Sensoreinrichtung (4) gemäß einem der Ansprüche 1 bis 10.

12. Verfahren zum Bestimmen eines Öffnungsgrads eines Ventils (2) einer Armatur (1), insbesondere eines Hydranten, mit einer Sensoreinrichtung (4), insbesondere einer Sensoreinrichtung (4) gemäß einem der Ansprüche 1 bis 10, wobei die Sensoreinrichtung (4) eine Anordnung (10) mit zumindest einem Magnetfeldsensor (11) und einem einzigen mit dem zumindest einen Magnetfeldsensor (11) interagierenden Permanentmagnet (12) umfasst, und
wobei die Armatur (1) ein Armaturgehäuse (5) und eine gegenüber dem Armaturengehäuse (5), zwischen einer Geschlossen-Position und einer Offen-Position bewegbare Bedieneinrichtung (3), insbesondere umfassend eine drehbare Spindel (7), für das Ventil (2) aufweist,
wobei der Permanentmagnet (12) in und/oder an dem Armaturgehäuse (5) und der zumindest eine Magnetfeldsensor (11) in und/oder an der Bedieneinrichtung (3) angeordnet ist, oder
wobei der zumindest eine Magnetfeldsensor (11) in und/oder an dem Armaturgehäuse (5) und der Permanentmagnet (12) in und/oder an der Bedieneinrichtung (3) angeordnet ist,
umfassend die Schritte:
- Betätigen (S1) der Bedieneinrichtung (3);
- Erfassen (S2) zumindest eines Abstandssignals, welches einer Abstandsänderung zwischen dem Permanentmagnet (12) und dem zumindest einen Magnetfeldsensor (11) zuordenbar ist, durch den zumindest einen Magnetfeldsensor (11); und
- Bestimmen (S3) des Öffnungsgrads des Ventils (2) basierend auf dem erfassten zumindest einen Abstandssignal.

13. Verfahren nach Anspruch 12, **dadurch gekennzeichnet, dass** beim Bestimmen (S31) des Öffnungsgrads basierend auf dem zumindest einen erfassten Abstandssignal zumindest ein Positions-Zeit-Wert der Bedieneinrichtung (3) bestimmt wird, wobei basierend auf dem zumindest einen Positions-Zeit-Wert und einem bekannten initialen Positions-Zeit-Wert ein mit dem Öffnungsgrad korrespondierender Bewegungsweg und/oder eine mit dem Öffnungsgrad korrespondierende Bewegungsrichtung der Bedieneinrichtung (3) bestimmt werden (S32), insbesondere wobei der initiale Positions-Zeit-Wert der Geschlossen- oder der Offen-Position zugeordnet ist.

14. Verfahren nach Anspruch 12 oder 13, **dadurch gekennzeichnet, dass** zumindest drei Magnetfeldsensoren (11) vorgesehen sind, wobei durch zumindest zwei der zumindest drei Magnetfeldsensoren (11) jeweils zumindest ein Abstandssignal erfasst wird, wobei beim Bestimmen des Öffnungsgrads basierend auf den zumindest zwei erfassten Abstandssignalen jeweils zumindest ein Positions-Zeit-Wert der Bedieneinrichtung (3) bestimmt wird, wobei basierend auf den bestimmten zumindest zwei Positions-Zeit-Werten ein mit dem Öffnungsgrad korrespondierender Bewegungsweg und/oder eine mit dem Öffnungsgrad korrespondierende Bewegungsrichtung der Bedieneinrichtung (3) bestimmt werden.

15. Verfahren nach einem der Ansprüche 12 bis 14, **dadurch gekennzeichnet, dass** durch einen an der Armatur (1), insbesondere der Bedieneinrichtung (3), angeordneten zumindest einen Beschleunigungssensor (13) ein aktueller Beschleunigungsvektor ermittelt wird und dass basierend auf einem bekannten initialen Beschleunigungsvektor und dem aktuellen Beschleunigungsvektor ein aktueller Neigungswinkel der Armatur (1) bestimmt wird, und/oder dass der Öffnungsgrad aus dem Verhältnis des bestimmten Bewegungswegs zu einem bekannten maximalen Bewegungsweg berechnet wird, insbesondere wobei der maximale Bewegungsweg der Offen-Position zugeordnet ist.
